# EUROPÄISCHE PATENTANMELDUNG

(11) **EP 1 713 078 A1**
(43) Veröffentlichungstag der Anmeldung: **18.10.2006**
(21) Anmeldenummer: 06000794.5
(22) Anmeldetag: 14.01.2006
(51) Int. Cl.: G11B 33/04, B42F 5/00

(54) **Mappe mit einer Hülle für einen scheibenförmigen digitalen Datenträger**

(30) Priorität: 11.04.2005 DE 202005005789 U
(71) Anmelder: Achilles Präsentationsprodukte GmbH, 29227 Celle (DE)
(72) Erfinder: Conrad, Carsten, 29313 Hambühren (DE)
(74) Vertreter: Lins, Edgar

(57) **Zusammenfassung**

Eine Mappe mit einem Deckel mit einer Öffnung zur Aufnahme eines topfförmigen transparenten Bodenteils (1), das zusammen mit einem in das Bodenteil (1) einschnappbaren Deckelteil (6) eine Hülle für einen scheibenförmigen digitalen Datenträger bildet, der mit seiner Labelseite zum Boden (2) des transparenten Bodenteils (1) gerichtet und mit einem zentralen Rundloch über einem Rastvorsprung (10) eingerastet in der Hülle gehalten ist, ermöglicht eine verbesserte Handhabung, insbesondere bei der Entnahme des Datenträgers, dadurch, dass das Bodenteil (1) einen planen, durchgehenden Boden (2) aufweist und dass das Deckelteil (6) den Rastvorsprung (10) für das zentrale Rundloch aufweist.

## Beschreibung

Die Erfindung betrifft eine Mappe mit einem Deckel mit einer Öffnung zur Aufnahme eines topfförmigen transparenten Bodenteils, das zusammen mit einem in das Bodenteil einschnappbaren Deckelteil eine Hülle für einen scheibenförmigen digitalen Datenträger bildet, der mit seiner Labelseite zum Boden des transparenten Bodenteils gerichtet und mit einem zentralen Rundloch über einem Rastvorsprung eingerastet in der Hülle gehalten ist.

Derartige Mappen sind in Form von Präsentationsmappen für Werbezwecke, als Dokumentationsmappen für Informations- und Unterrichtszwecke usw. bekannt. Die in der Mappe enthaltenen Schriftstücke werden dabei durch auf dem digitalen Datenträger gespeicherte Präsentationen und/oder Informationen ergänzt, die beispielsweise auf dem Display eines Computers darstellbar sind.

An derartige Mappen werden regelmäßig hohe Anforderungen bezüglich der ästhetischen Gestaltung gestellt. Insbesondere wird regelmäßig das Label des scheibenförmigen Datenträgers (im Allgemeinen eine CD in Form einer CD-ROM oder einer Mini-Disc) in die äußere Gestaltung der Mappe einbezogen. Demgemäß ist es erforderlich, dass die Labelseite der CD zum Boden des transparent ausgebildeten Bodenteils gerichtet ist.

In einer im Gebrauch befindlichen Ausgestaltung ist das Bodenteil der Hülle in die Mappe so eingesetzt, dass der Boden des Bodenteils mit der Außenseite des Deckels der Mappe fluchtet. Das Bodenteil weist einen radialen Wulst in seiner Mantelwandung auf, mit der es in der Öffnung des Deckels der Mappe klemmend gehalten ist. Das Bodenteil ist mit einem zentralen Rastvorsprung ausgebildet, der mit der zentralen runden Öffnung der CD zusammenwirkt, um diese klemmend zu halten. Das rund ausgebildete Bodenteil ist bezüglich der CD im Übermaß gefertigt, sodass ein kreisförmiger Rand zwischen CD und der Umfangswand des topfförmigen Bodenteils besteht, in den ein ringförmig umlaufender Rand eines Deckelteils eingreifen kann, wenn das Deckelteil in das Bodenteil rastend eingesetzt wird. Das Deckelteil ist ebenfalls mit einem zentralen Vorsprung ausgestattet, der in eine Ausnehmung des zentralen Rastvorsprungs des Bodenteils hineinragen kann und so ausgebildet ist, dass das Deckelteil drehfest mit dem Bodenteil verbunden ist. Bodenteil und Deckelteil weisen jeweils einen auf der Innenseite des Deckels der Mappe anliegenden ringförmigen Flanschrand auf, wobei der Flanschrand des Deckelteils mit einer radial nach außen vorstehenden Lasche versehen ist, um das Abziehen des Deckelteils von dem Bodenteil zu erleichtern. Wenn das Deckelteil von dem Bodenteil abgezogen ist, ist die CD aus dem offenen topfförmigen Bodenteil entnehmbar, allerdings mit der die Informationen enthaltenden spiegelnden Seite der CD nach oben, da die Labelseite zum Boden des Bodenteils zeigt. Es besteht daher die Gefahr, dass bei der Entnahme die spiegelnde Seite durch Fingerabdrücke verunreinigt oder bei ungeschickter Handhabung sogar zerkratzt wird. Dieser Nachteil ist für die Gestaltung des Deckels der Mappe unter Einschluss des Labels der CD in Kauf genommen worden.

Der vorliegenden Erfindung liegt die Aufgabe zugrunde unter Beibehaltung einfacher Teile für die Hülle des scheibenförmigen digitalen Datenträgers und der Gestaltungsmöglichkeit des Deckels der Mappe unter Einschluss des Labels des Datenträgers eine verbesserte Handhabung, insbesondere bei der Entnahme des Datenträgers, zu ermöglichen.

Diese Aufgabe wird erfindungsgemäß bei einer Mappe der eingangs erwähnten Art dadurch gelöst, dass das Bodenteil einen planen, durchgehenden Boden aufweist und dass das Deckelteil des Rastvorsprung für das zentrale Rundloch aufweist.

Erfindungsgemäß wird das in den Deckel der Mappe eingesetzte Bodenteil nunmehr so ausgebildet, dass es keine Haltefunktion für den scheibenförmigen digitalen Datenträger enthält. Vielmehr ist diese Haltefunktion in unüblicher Weise nunmehr dem Deckelteil zugeordnet, das den Datenträger in seinem zentralen Rundloch klemmend hält. Dadurch wird der Vorteil erzielt, dass der Datenträger von seiner Labelseite her ergriffen wird, wenn er in das Deckelteil eingesetzt wird oder aus dem Deckelteil entnommen wird.

Die Entnahme des Datenträgers erfolgt somit nach der Entnahme des Deckelteils zusammen mit dem Datenträger aus dem Bodenteil, da der Datenträger an dem Deckelteil klemmend befestigt ist. Erst wenn das Deckelteil von dem Bodenteil gelöst ist, erfolgt die Entnahme des Datenträgers aus dem Deckelteil. Dabei liegt der Datenträger mit seiner empfindlichen Seite zur Deckelwand des Deckelteils gerichtet und ist mit seiner Labelseite zur handhabenden Person hin gerichtet. Wenn das Deckelteil in das Bodenteil eingesetzt ist, liegt die Labelseite somit zum Boden des Bodenteils gerichtet.

Auch bei der erfindungsgemäßen Anordnung ist das Deckelteil vorzugsweise mit einem umlaufenden Rand in den topfförmigen Bodenteil einrastbar. Das Einrasten kann dadurch unterstützt werden, dass der umlaufenden Rand des Deckelteils mit nach radial außen zeigenden Rastnasen versehen ist.

Das Bodenteil ist zweckmäßigerweise mit einem radialen Wulst in einer Umfangswand in der Öffnung des Deckels klemmend gehalten. Bodenteil und Deckelteil sind vorzugsweise kreisrund ausgebildet. Bodenteil und Deckelteil können jeweils ein gezogenes Kunststoffteil sein, insbesondere aus einem transparenten Kunststoffmaterial.

Die Erfindung soll im Folgenden anhand eines in der Zeichnung dargestellten Ausführungsbeispiels näher erläutert werden. Es zeigen:
- Figur 1: eine Draufsicht auf ein Bodenteil der Hülle;
- Figur 2: eine Seitenansicht des Bodenteils gemäß Figur 1;
- Figur 3: eine Draufsicht auf ein Deckelteil;
- Figur 4: einen Schnitt durch das Deckelteil gemäß Figur 3.

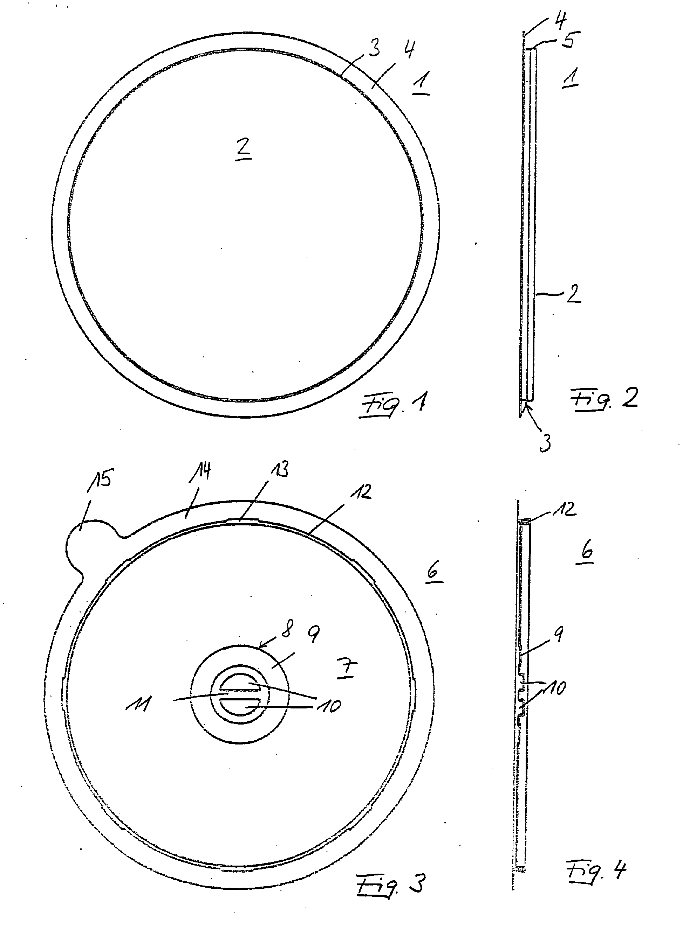

Das in den Figuren 1 und 2 dargestellte Bodenteil 1 ist topfförmig ausgebildet und besteht aus einem kreisrunden Boden 2 mit einer kurzen, kreiszylindrischen Mantelwand 3 und einem sich an die Mantelwand 3 anschließenden ringförmigen flachen Flansch 4. Die Höhe der Mantelwand 3 entspricht der Materialstärke des Deckels der Mappe, in die das Bodenteil 1 eingesetzt wird, damit der Boden 2 mit der Außenseite des Deckels der Mappe fluchtet und der Flansch 4 auf der Innenseite des Deckels anliegt und ggf. dort auch noch verklebt werden kann. Eine übliche Höhe der Mantelwand 3 liegt zwischen 1,9 und 2,4 mm, beispielsweise bei 2,2 mm.

Figur 2 verdeutlicht, dass die Mantelwand 3 am Übergang zum Boden 2 einen ringförmigen, radial etwas vorstehenden Wulst 5 aufweist, mit dem das Bodenteil 1 klemmend in die entsprechend gebildete Öffnung des Deckels der Mappe einsetzbar ist.

Das in den Figuren 3 und 4 dargestellte Deckelteil 6 weist eine im Wesentlichen ebene Deckelwand 7 auf, von der sich ein Mittenbereich 8 etwas erhebt und ein gegenüber der Deckelwand 7 geringfügig erhöhtes, ringförmiges Aufnahmeplateau 9 bildet. Im Zentrum der Deckelwand 7 befinden sich zwei Rastvorsprünge 10, die durch einen Zwischenraum 11 voneinander getrennt sind und deren kreisabschnittförmige Außenkontur ein geringes Übermaß gegenüber der Innenkontur des Rundlochs einer üblichen CD aufweist. Somit kann eine CD klemmend an den Rastvorsprüngen 10 gehalten werden, während sie mit einem unbespielten Mittenbereich auf dem Auflageplateau 9 aufliegt, sodass die bespielte Unterseite in üblicher Weise einen Abstand zu der Deckelfläche 7 des Deckelteils 6 aufweist.

Das Deckelteil 6 weist einen U-förmig eingeformten kreisförmigen Rand 12 auf, der bereichsweise mit radial nach außen vorspringenden Rastnasen 13 versehen ist, die innen an der Mantelwand 3 des Bodenteils 1 rastend anliegen, wenn das Deckelteil 6 in das Bodenteil 1 eingesetzt ist. Die Rastnasen 13 können dabei in eine auf der Innenseite der Mantelwand 3 ausgebildete, dem Ringwulst 5 entsprechende Nut eingreifen.

An den Rand 12 schließt sich nach radial außen ein ringförmiger Flansch 14 an, der an einer Stelle mit einer nach radial außen zeigenden Lasche 15 versehen ist, die zum Abziehen des Deckelteils 6 von dem Bodenteil 1 dient.

Es ist erkennbar, dass eine CD als digitaler Datenträger mit ihrem zentralen Rundloch von den Rastvorsprüngen 10 des Deckelteils 6 gehalten wird und dass nach dem Einsetzen der CD in das Deckelteil 6 das Deckelteil 6 in das Bodenteil 1, das in dem Deckel der Mappe befestigt ist, rastend eingesetzt wird. Entsprechend wird für die Entnahme das Deckelteil 6 mittels der Lasche 15 aus dem Bodenteil 1 abgezogen, um die an dem Deckelteil 6 klemmend haftende CD entnehmen zu können. Die CD ist dabei mit ihrer Labelseite zur offenen Seite des Deckelteils 6, also von der Deckelseite 7 weg gerichtet, sodass die CD mit ihrer Labelseite zum Boden 2 der aus Bodenteil 1 und Deckelteil 6 gebildeten Hülle zeigt und somit in die Gestaltung der Außenseite des Deckels der Mappe einbezogen werden kann. Das Bodenteil ist zweckmäßiger Weise an die Abmessung der CD (Durchmesser einer CD-ROM 120 mm oder einer Mini-Disc 80 mm) angepasst.

## Patentansprüche

1. Mappe mit einem Deckel mit einer Öffnung zur Aufnahme eines topfförmigen transparenten Bodenteils (1), das zusammen mit einem in das Bodenteil (1) einschnappbaren Deckelteil (6) eine Hülle für einen scheibenförmigen digitalen Datenträger bildet, der mit seiner Labelseite zum Boden (2) des transparenten Bodenteils (1) gerichtet und mit einem zentralen Rundloch über einem Rastvorsprung (10) eingerastet in der Hülle gehalten ist, **dadurch gekennzeichnet, dass** das Bodenteil (1) einen planen, durchgehenden Boden (2) aufweist und dass das Deckelteil (6) den Rastvorsprung (10) für das zentrale Rundloch aufweist.

2. Mappe nach Anspruch 1, **dadurch gekennzeichnet, dass** das Deckelteil (6) mit einem umlaufenden Rand (12) in dem topfförmigen Bodenteil (1) einrastbar ist.

3. Mappe nach Anspruch 2, **dadurch gekennzeichnet, dass** der umlaufende Rand (12) des Deckelteils (6) mit nach radial außen ragenden Rastnasen (13) versehen ist.

4. Mappe nach einem der Ansprüche 1 bis 3, **dadurch gekennzeichnet, dass** das Bodenteil (1) mit einem radialen Wulst (5) in seiner Umfangswand (3) in der Öffnung des Deckels klemmend gehalten ist.

5. Mappe nach einem der Ansprüche 1 bis 4, **dadurch gekennzeichnet, dass** der Boden (2) des Bodenteils (1) mit der Außenseite des Deckels fluchtet.

6. Mappe nach einem der Ansprüche 1 bis 5, **dadurch gekennzeichnet, dass** Bodenteil (1) und Deckelteil (6) jeweils ein tiefgezogenes Kunststoffteil sind.
